# EUROPÄISCHE PATENTSCHRIFT

(11) **EP 2 210 325 B1**
(45) Veröffentlichungstag und Bekanntmachung des Hinweises auf die Patenterteilung: **26.04.2017**
(21) Anmeldenummer: 07819867.8
(22) Anmeldetag: 15.11.2007
(51) Int. Cl.: H02H 7/26, H02H 3/05

(54) **VERFAHREN UND ANORDNUNG ZUM SCHÜTZEN, STEUERN ODER ÜBERWACHEN EINER ELEKTRISCHEN SCHALT- ODER ENERGIEVERSORGUNGSANLAGE**
METHOD AND ARRANGEMENT FOR PROTECTING, CONTROLLING OR MONITORING AN ELECTRICAL SWITCHGEAR OR POWER SUPPLY STATION
PROCÉDÉ ET DISPOSITIF POUR PROTÉGER, COMMANDER OU SURVEILLER UNE INSTALLATION DE DISTRIBUTION ÉLECTRIQUE OU D'ALIMENTATION EN ÉNERGIE ÉLECTRIQUE

(43) Veröffentlichungstag der Anmeldung: 28.07.2010
(73) Patentinhaber: Siemens Aktiengesellschaft, 80333 München (DE)
(72) Erfinder: DUFAURE, Thierry, 12053 Berlin (DE)
(86) Internationale Anmeldenummer: PCT/EP2007/009998
(87) Internationale Veröffentlichungsnummer: WO 2009/062535

(56) Entgegenhaltungen:
- WO-A-00/48282
- US-A1- 2005 043 861
- US-A1- 2006 193 099

## Beschreibung

Die Erfindung bezieht sich auf ein Verfahren zum Schützen, Steuern oder Überwachen einer elektrischen Schalt- oder Energieversorgungsanlage, wobei bei dem Verfahren mit einem Feldgerät, insbesondere einem Schutzgerät, Datentelegramme erzeugt werden, die sich auf den Zustand der Schalt- oder Energieversorgungsanlage beziehen, und die Datentelegramme an ein übergeordnetes Leitebenengerät übertragen werden.

Zum Schützen, Steuern und Überwachen von elektrischen Schaltoder Energieversorgungsanlagen werden beispielsweise so genannte Stationsautomatisierungssysteme eingesetzt. Ein solches Stationsautomatisierungssystem weist im Allgemeinen Feldgeräte, insbesondere Schutzgeräte, sowie zumindest ein übergeordnetes Leitebenengerät auf, wobei die Geräte zur Erfüllung ihrer Aufgaben untereinander Informationen austauschen. Zum Austausch von Informationsobjekten wird eine vorgegebene Kommunikationstechnologie mit einem Übertragungsmedium und mit einem Kommunikationsprotokoll eingesetzt. Beispielsweise kann bei Stationsautomatisierungssystemen das Kommunikationsprotokoll nach dem IEC 61850-Standard verwendet werden.

Um die Zuverlässigkeit solcher Anordnungen zum Schützen, Steuern oder Überwachen von elektrischen Schalt- oder Energieversorgungsanlagen zu erhöhen, ist es darüber hinaus bekannt, Feldgeräte redundant zu betreiben: Fällt eines der Feldgeräte aus, so kommt es dennoch zu keinem kompletten Systemausfall, weil die Aufgaben des ausgefallenen Feldgeräts durch das zugeordnete parallel arbeitende Ersatzgerät wahrgenommen werden. Ein Nachteil eines solchen Redundanzkonzepts ist jedoch, dass der Aufwand bei der Konfigurierung des übergeordneten Leitebenengeräts anwächst, weil funktionsgleiche Feldgeräte doppelt oder mehrfach vorhanden sind und demgemäß bei der Konfiguration der Leitebene bzw. bei der Konfiguration der Leitebenengeräten auch doppelt bzw. mehrfach berücksichtigt werden müssen. Ein solches System mit zwei redundanten Schutzgeräten ist aus US 2006/139099 bekannt.

Der Erfindung liegt die Aufgabe zugrunde, ein redundant arbeitendes Verfahren zum Schützen, Steuern oder Überwachen einer elektrischen Schalt- oder Energieversorgungsanlage anzugeben, das derart ausgestaltet ist, dass der Konfigurationsaufwand bei den übergeordneten Leitebenengeräten trotz Redundanz möglichst gering ist.

Diese Aufgabe wird ausgehend von einem Verfahren der eingangs beschriebenen Art erfindungsgemäß durch die kennzeichnenden Merkmale des Anspruchs 1 gelöst. Vorteilhafte Ausgestaltungen des erfindungsgemäßen Verfahrens sind in Unteransprüchen angegeben.

Danach ist erfindungsgemäß vorgesehen, dass mit einem zu einem ersten Feldgerät redundant arbeitenden zweiten Feldgerät geprüft wird, ob das erste Feldgerät funktionsfähig ist, indem eine Kommunikationsverbindung zwischen den beiden Feldgeräten betrieben wird, über die das zweite Feldgerät von dem Funktionsstatus des ersten Feldgerätes Kenntnis erlangt, und das zweite Feldgerät das Weiterleiten eigener Datentelegramme an das übergeordnete Leitebenengerät unterlässt, wenn das erste Feldgerät funktioniert, und andernfalls eigene Datentelegramme, die sich auf den Zustand der Schalt- oder Energieversorgungsanlage beziehen, an das übergeordnete Leitebenengerät übersendet.

Ein wesentlicher Vorteil des erfindungsgemäßen Verfahrens ist darin zu sehen, dass bei diesem das redundant arbeitende zweite Feldgerät bei der Konfiguration des übergeordneten Leitebenengeräts nicht selbständig berücksichtigt werden muss; denn das Leitebenengerät erhält Datentelegramme stets nur einmal, sei es von dem ersten "Haupt-Feldgerät" oder von dem zweiten "Ersatz-Feldgerät". Es reicht somit bei dem erfindungsgemäßen Verfahren aus, für die Konfiguration des ersten und des zweiten Feldgeräts im Leitebenengerät lediglich einen einzigen gemeinsamen Parametersatz vorzusehen - im Unterschied zu herkömmlichen vorbekannten Verfahren, bei denen für jedes Feldgerät jeweils ein individueller Parametersatz in dem Leitebenengerät vorgesehen werden muss, weil stets alle Feldgeräte, also auch die redundanten "Ersatz-Feldgeräte", Datentelegramme senden, auch wenn die "Haupt-Feldgeräte" noch korrekt arbeiten. Demgemäß kann der Konfigurationsaufwand beispielsweise bei zwei Feldgeräten, von denen eines eine Redundanzaufgabe hat, gegenüber vorbekannten Verfahren zumindest annäherungsweise halbiert werden.

Ein weiterer wesentlicher Vorteil des erfindungsgemäßen Verfahrens ist darin zu sehen, dass das Leitebenengerät entlastet wird, da es Datentelegramme identischen Inhalts nicht doppelt erhält und demgemäß nicht doppelt auswerten muss; denn bei dem erfindungsgemäßen Verfahren werden von dem zweiten Feldgerät, also dem "Ersatz-Feldgerät", nur dann Datentelegramme gesendet, wenn das erste Feldgerät ("Haupt-Feldgerät") defekt ist und selbst keine Datentelegramme mehr übermittelt. Es wird also in vorteilhafter Weise auch die Kommunikationsverbindung zwischen den Feldgeräten und dem Leitebenengerät entlastet.

Gemäß einer vorteilhaften Ausgestaltung des Verfahrens ist vorgesehen, dass die Feldgeräte untereinander sowie mit dem Leitebenengerät über ein Kommunikationsnetz verbunden werden und die Datentelegramme über das Kommunikationsnetz an das Leitebenengerät übermittelt werden und dass als Kommunikationsverbindung zwischen den beiden Feldgeräten eine Peer-to-Peer-Verbindung über das Kommunikationsnetz betrieben wird. Alternativ kann als direkte Kommunikationsverbindung zwischen den beiden Feldgeräten auch eine von dem Kommunikationsnetz getrennte, separate Datenverbindung aufgebaut werden.

Als Datentelegramme können beispielsweise GOOSE-Telegramme gemäß dem IEC61850-Standard an das übergeordnete Leitebenengerät übertragen werden. Bei GOOSE-Telegrammen handelt es sich um "Multicast-Telegramme", die an alle an das Kommunikationsnetz angeschlossenen Geräte gesendet werden, eine 1:1-Adresszuweisung - wie bei Peer-to-Peer-Verbindungen -, durch die die Telegramme nur an einen einzigen Empfänger geschickt werden würden, erfolgt dabei nicht.

Um die Verarbeitung der Datentelegramme in dem Leitebenengerät zu vereinfachen, wird es außerdem als vorteilhaft angesehen, wenn das zweite Feldgerät die Datentelegramme derart erzeugt, dass diese inhaltlich mit den Datentelegrammen des ersten Feldgeräts inhaltlich übereinstimmen bzw. mit diesen identisch sind; bei dieser Ausgestaltung muss das Leitebenengerät die Datentelegramme der beiden Feldgeräte also nicht unterscheiden und kann sie in identischer Weise weiterverarbeiten.

Gemäß einer anderen besonders bevorzugten Ausgestaltung des Verfahrens ist vorgesehen, dass in dem ersten und dem zweiten Feldgerät jeweils ein Betriebsmodul, das die Funktion des Schützens, Steuerns oder Überwachens der elektrischen Schalt- oder Energieversorgungsanlage wahrnimmt und die Datentelegramme für das übergeordnete Leitebenengerät erzeugt, ein Überwachungsmodul, das die direkte Kommunikationsverbindung zwischen den Feldgeräten betreibt, sowie ein Kommunikationsmodul, das das Senden der Datentelegramme durchführt, betrieben werden, wobei das Betriebsmodul und das Kommunikationsmodul durch das Überwachungsmodul verbunden werden und das Weiterleiten der von dem Betriebsmodul erzeugten Datentelegramme an das Kommunikationsmodul von dem Überwachungsmodul durchgeführt und/oder überwacht und/oder blockiert wird.

Vorzugsweise sieht das zweite Feldgerät das erste Feldgerät als nichtfunktionsfähig an und übersendet die eigenen Datentelegramme an das übergeordnete Leitebenengerät, wenn das Überwachungsmodul des zweiten Feldgerätes zu dem Überwachungsmodul des ersten Feldgerätes keine direkte Kommunikationsverbindung aufbauen kann. Auch kann das zweite Feldgerät das erste Feldgerät als nichtfunktionsfähig ansehen und die eigenen Datentelegramme an das übergeordnete Leitebenengerät übersenden, wenn das Überwachungsmodul des ersten Feldgerätes dem Überwachungsmodul des zweiten Feldgerätes über die direkte Kommunikationsverbindung mitteilt, dass das Betriebsmodul und/oder das Kommunikationsmodul des ersten Feldgerätes defekt ist.

Besonders bevorzugt werden das Überwachungsmodul und das Betriebsmodul in der Anwendungsschicht 7 des OSI-Models und das Kommunikationsmodul in der Sicherungsschicht 2 des OSI-Models betrieben: In diesem Fall wird der Zugriff des Betriebsmoduls, der aus der Schicht 7 heraus auf das Kommunikationsmodul in der Schicht 2 erfolgt, also von der Schicht 7 aus überwacht.

Die Erfindung bezieht sich außerdem auf eine Anordnung zum Schützen, Steuern oder Überwachen einer elektrischen Schalt- oder Energieversorgungsanlage, mit einem Feldgerät, insbesondere einem Schutzgerät, zum Erzeugen von Datentelegrammen, die sich auf den Zustand der Schalt- oder Energieversorgungsanlage beziehen, mit einem zu dem ersten Feldgerät redundant arbeitenden zweiten Feldgerät und mit einem den beiden Feldgeräten übergeordneten Leitebenengerät.

Erfindungsgemäß ist diesbezüglich vorgesehen, dass die beiden Feldgeräte über eine direkte Kommunikationsverbindung miteinander verbunden sind, das zweite Feldgerät derart ausgestaltet ist, dass es über die direkte Kommunikationsverbindung von dem Funktionsstatus des ersten Feldgerätes Kenntnis erlangen kann und das Weiterleiten eigener Datentelegramme an das übergeordnete Leitebenengerät unterlässt, wenn das erste Feldgerät funktioniert, und andernfalls eigene Datentelegramme, die sich auf den Zustand der Schalt- oder Energieversorgungsanlage beziehen, an das übergeordnete Leitebenengerät übersendet.

Bezüglich der Vorteile der erfindungsgemäßen Anordnung sei auf die obigen Ausführungen im Zusammenhang mit dem erfindungsgemäßen Verfahren verwiesen, da die Vorteile des erfindungsgemäßen Verfahrens denen der erfindungsgemäßen Anordnung im Wesentlichen entsprechen.

Vorzugsweise handelt es sich bei der direkten Kommunikationsverbindung zwischen den beiden Feldgeräten um eine Peer-to-Peer-Verbindung.

Bevorzugt ist in dem Leitebenengerät für die beiden Feldgeräte eine einzige gemeinsame Konfigurationsdatei gespeichert, die sowohl zum Auswerten der Datentelegramme des ersten Feldgerätes als auch zum Auswerten der Datentelegramme des zweiten Feldgerätes herangezogen wird.

Die Erfindung bezieht sich außerdem auf ein Feldgerät zum Schützen, Steuern oder Überwachen einer elektrischen Schalt- oder Energieversorgungsanlage, das geeignet ist, Datentelegramme, die sich auf den Zustand der Schalt- oder Energieversorgungsanlage beziehen, zu erzeugen und an ein übergeordnetes Leitebenengerät zu übersenden.

Erfindungsgemäß ist vorgesehen, dass das Feldgerät eine Redundanzbetriebsart aufweist, in der es dazu bestimmt ist, eine direkte Kommunikationsverbindung zu einem anderen Feldgerät zu betreiben, von dem Funktionsstatus dieses anderen Feldgerätes Kenntnis zu erlangen und das Weiterleiten eigener Datentelegramme an das übergeordnete Leitebenengerät zu unterlassen, wenn das andere Feldgerät funktioniert, und andernfalls eigene Datentelegramme, die sich auf den Zustand der Schalt- oder Energieversorgungsanlage beziehen, an das übergeordnete Leitebenengerät zu übersenden.

Bezüglich der Vorteile des erfindungsgemäßen Feldgeräts sei auf die obigen Ausführungen im Zusammenhang mit dem erfindungsgemäßen Verfahren verwiesen.

Im Hinblick auf einen einfachen Aufbau wird es als vorteilhaft angesehen, wenn das Feldgerät aufweist: ein Betriebsmodul, das die Funktion des Schützens, Steuerns oder Überwachens der elektrischen Schalt- oder Energieversorgungsanlage unterstützt und die Datentelegramme für das übergeordnete Leitebenengerät erzeugt, ein Überwachungsmodul, das die direkte Kommunikationsverbindung zwischen den Feldgeräten verwaltet, und ein Kommunikationsmodul, das das Senden und Empfangen von Datentelegrammen über das Kommunikationsnetz durchführt, wobei das Betriebsmodul und das Kommunikationsmodul durch das Überwachungsmodul verbunden sind und das Weiterleiten der von dem Betriebsmodul erzeugten Datentelegramme an das Kommunikationsmodul von dem Überwachungsmodul durchgeführt und/oder überwacht und/oder blockiert wird.

Die Erfindung wird nachfolgend anhand von Ausführungsbeispielen näher erläutert. Dabei zeigen beispielhaft
- Figur 1: ein Ausführungsbeispiel für eine Anordnung mit Feldgeräten und einem Leitebenengerät, bei der die Feldgeräte über eine separate Datenleitung miteinander verbunden sind,
- Figuren 2-3: beispielhaft den Betrieb der Anordnung gemäß Figur 1,
- Figur 4: ein weiteres Ausführungsbeispiel für eine Anordnung mit Feldgeräten und einem Leitebenengerät, wobei die Feldgeräte über eine Peer-to-Peer-Verbindung miteinander kommunizieren,
- Figur 5: ein drittes Ausführungsbeispiel für eine Anordnung mit Feldgeräten und einem Leitebenengerät, wobei das Leitebenengerät in die Peer-to-Peer-Struktur eingebunden ist,
- Figur 6: ein Ausführungsbeispiel für einen Aufbau der Feldgeräte gemäß Figur 4 anhand des OSI-Schichtenmodells und
- Figur 7: ein Ausführungsbeispiel für den Aufbau des Leitebenengeräts gemäß Figur 5 anhand des OSI-Schichtmodells.

In den Figuren werden der Übersicht halber für identische oder vergleichbare Komponenten stets dieselben Bezugszeichen verwendet.

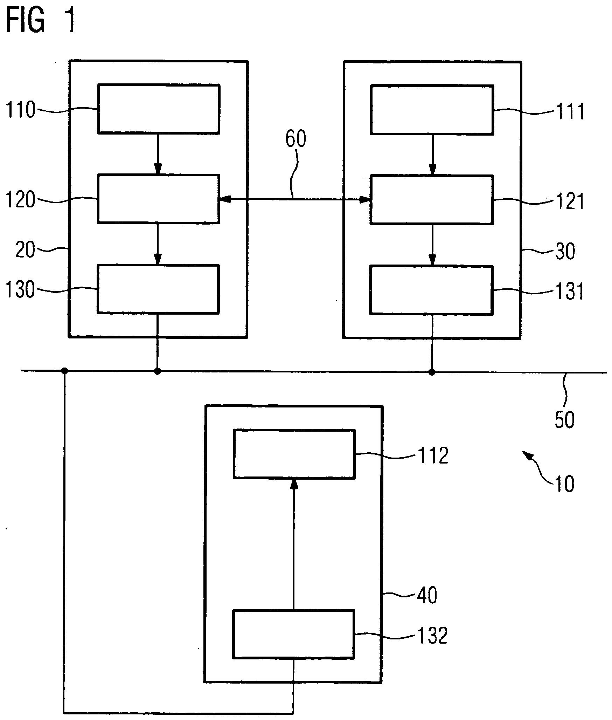

In der Figur 1 erkennt man eine Anordnung 10 zum Schützen, Steuern und Überwachen einer elektrischen Schalt- oder Energieversorgungsanlage. Die Schalt- oder Energieversorgungsanlage ist der Übersicht halber in der Figur 1 selbst nicht gezeigt.

Die Anordnung 10 umfasst ein erstes Feldgerät 20, ein zweites Feldgerät 30 sowie ein Leitebenengerät 40. Die drei Geräte 20, 30 und 40 sind über ein Kommunikationsnetz 50 miteinander verbunden.

Außerdem erkennt man in der Figur 1 eine direkte Kommunikationsverbindung 60, mit der die beiden Feldgeräte 20 und 30 unmittelbar miteinander in Verbindung stehen.

Die beiden Feldgeräte 20 und 30 weisen jeweils ein Betriebsmodul 110 bzw. 111, ein Überwachungsmodul 120 bzw. 121 sowie ein Kommunikationsmodul 130 bzw. 131 auf. Das Leitebenengerät 40 ist mit einem Leitebenenmodul 112 sowie mit einem Kommunikationsmodul 132 ausgestattet.

Wie sich in der Figur 1 erkennen lässt, sind die Kommunikationsmodule 130, 131 sowie 132 mit dem Kommunikationsnetz 50 verbunden, so dass die drei Geräte 20, 30 und 40 über ihre Kommunikationsmodule 130, 131 und 132 miteinander kommunizieren können und Datentelegramme austauschen können.

Über die direkte Kommunikationsverbindung 60, die bei dem Ausführungsbeispiel gemäß der Figur 1 als separate Datenleitung ausgeführt ist, ist darüber hinaus ein unmittelbarer Datenaustausch zwischen den beiden Feldgeräten 20 und 30 möglich.

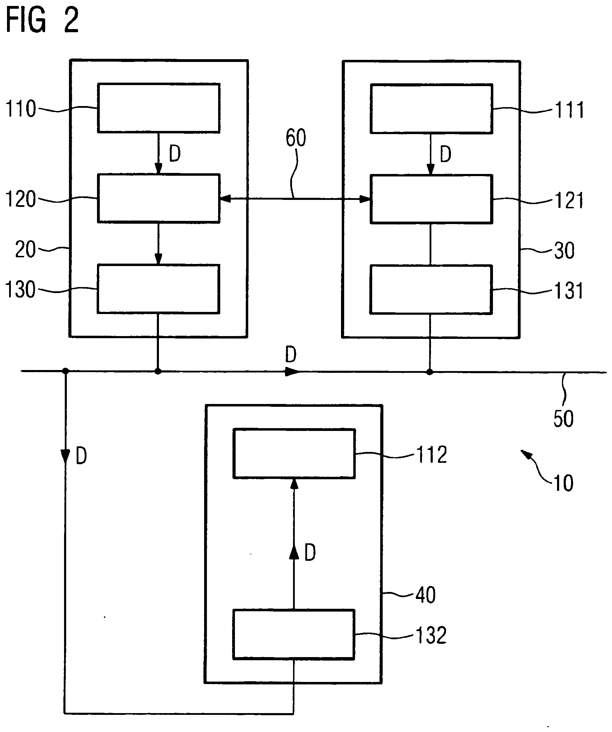

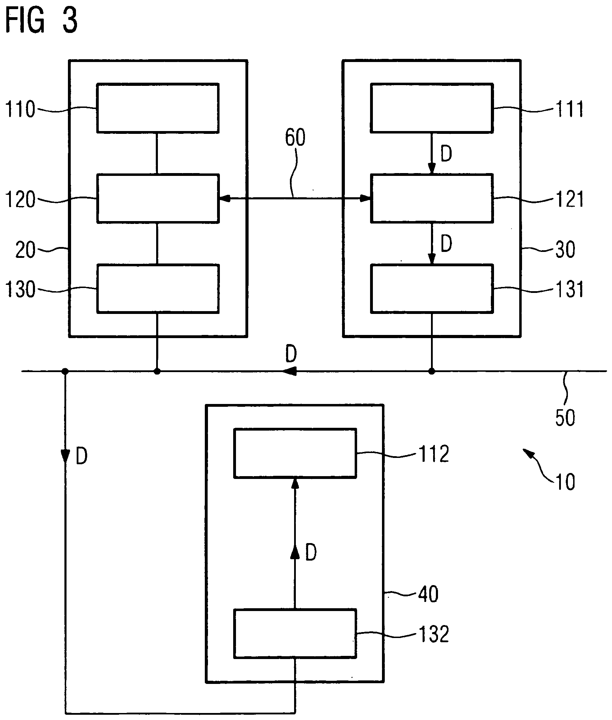

Der Betrieb der Anordnung gemäß Figur 1 wird nachfolgend beispielhaft anhand der Figuren 2 und 3 erläutert.

In der Figur 2 ist der Normalbetrieb der Anordnung 10 gemäß Figur 1 dargestellt. Bei diesem Normalbetrieb sind die beiden Feldgeräte 20 und 30 betriebsbereit. In diesem Fall wird das erste Feldgerät 20 als Hauptfeldgerät betrieben, und das zweite Feldgerät 30 bildet lediglich ein redundant arbeitendes Ersatzfeldgerät.

Das Betriebsmodul 110 des ersten Feldgerätes 20 überwacht die nicht weiter dargestellte elektrische Schalt- oder Energieversorgungsanlage und erzeugt entsprechende Datentelegramme D. Die Datentelegramme D gelangen zu dem Überwachungsmodul 120, das die Datentelegramme D weiter an das Kommunikationsmodul 130 übermittelt. Die Aufgabe des Kommunikationsmoduls 130 besteht darin, die Datentelegramme D an alle an das Kommunikationsnetz 50 angeschlossenen Geräte zu übersenden. Dies geschieht beispielsweise nach dem IEC61850-Standard in Form von GOOSE-Telegrammen, die als Multicast-Telegramme an alle an das Kommunikationsnetz 50 angeschlossenen Geräte geleitet werden.

Die von dem ersten Feldgerät 20 erzeugten Datentelegramme D gelangen somit auch zu dem Kommunikationsmodul 132 des Leitebenengerätes 40 und nachfolgend zu dem Leitebenenmodul 112, das die Datentelegramme D leitebenenmäßig auswertet und weiter verarbeitet.

Auch das Betriebsmodul 111 des zweiten Feldgerätes 30 erzeugt Datentelegramme D. Die Datentelegramme D des zweiten Feldgerätes 30 sind mit denen des ersten Feldgerätes 20 völlig oder zumindest inhaltlich identisch, da das Feldgerät 30 als Ersatzfeldgerät redundant arbeitet und daher identische Arbeitsergebnisse wie das erste Feldgerät 20 erzeugt. Die Datentelegramme D des Betriebsmoduls 111 gelangen zu dem Überwachungsmodul 121 des zweiten Feldgerätes 30.

Die beiden Überwachungsmodule 120 und 121 der beiden Feldgeräte 20 und 30 stehen über die direkte Kommunikationsverbindung 60 miteinander in Verbindung. Über diese Kommunikationsverbindung 60 erfragt das Überwachungsmodul 121 von dem Überwachungsmodul 120 des ersten Feldgerätes 20 den jeweiligen Betriebszustand. Erkennt das Überwachungsmodul 121 des zweiten Feldgerätes 30, dass das erste Feldgerät 20 korrekt arbeitet und die erforderlichen Datentelegramme D erzeugt sowie diese über das Kommunikationsmodul 130 an das Kommunikationsnetz 50 abgibt, so wird das Überwachungsmodul 121 keine eigenen Datentelegramme D weiterleiten und die von dem Betriebsmodul 111 erzeugten eigenen Datentelegramme blockieren. Dies bedeutet, dass das Kommunikationsmodul 131 die Datentelegramme des Betriebsmoduls 111 weder erhalten noch weiterleiten wird und diese demgemäß nicht zu dem Kommunikationsnetz 50 gelangen können.

Aufgrund des beschriebenen Blockierens der Datentelegramme D durch das Überwachungsmodul 121 gelangen zu dem Kommunikationsmodul 132 des Leitebenengerät 40 also lediglich die Datentelegramme D des ersten Feldgerätes 20, so dass das Leitebenenmodul 112 lediglich diese Datentelegramme D auswerten muss.

Stellt nun während des weiteren Betriebes das Überwachungsmodul 121 des zweiten Feldgerätes 30 fest, dass das erste Feldgerät 20 defekt ist, weil beispielsweise das Betriebsmodul 110 nicht mehr die Datentelegramme D erzeugt, so wird es die von dem eigenen Betriebsmodul 111 erzeugten Datentelegramme D an das Kommunikationsmodul 131 weiterschalten, so dass diese über das Kommunikationsnetz 50 zu dem Leitebenengerät 40 gelangen können. Das redundant arbeitende zweite Feldgerät 30 wird somit als neues "Hauptfeldgerät" arbeiten und die Funktion des defekten ersten Feldgerätes 20 vollständig übernehmen. Diese Übernahme der Funktion des ersten Feldgerätes erfolgt dabei vorzugsweise erst dann, wenn das erste Feldgerät 20 keine eigenen Datentelegramme mehr erzeugt. Dadurch ist sichergestellt, dass bei dem Leitebenengerät 40 stets nur ein Satz Datentelegramme vorliegen wird, seien es - während des Normalbetriebs - die Datentelegramme des ersten Feldgerätes 20 oder - während des "Ersatzbetriebes" - die Datentelegramme des zweiten Feldgerätes 30.

Bei dem Ausführungsbeispiel gemäß den Figuren 1 bis 3 ist beispielhaft davon ausgegangen worden, dass die Überwachungsmodule 120 und 121 über die separate Datenverbindung 60 miteinander kommunizieren; eine solche separate Datenverbindung ist nicht zwingend erforderlich; alternativ könnte das Überwachungsmodul 121 des zweiten Feldgerätes 30 die korrekte Funktionsweise des ersten Feldgerätes 20 auch dadurch feststellen, dass es das Kommunikationsnetz 50 auf das Vorliegen der Datentelegramme D des ersten Feldgeräts überwacht und bei Ausbleiben der entsprechenden Datentelegramme D des ersten Feldgerätes 20 die selbst erzeugten eigenen Datentelegramme an das Leitebenengerät 40 übermittelt. Eine solche "mittelbare" Überwachung über das Vorliegen oder Nichtvorliegen der Datentelegramme des ersten Feldgerätes ist jedoch mit zeitlichen Verzögerungen verbunden, eine Überwachung des ersten Feldgerätes durch das zweite Feldgerät über eine zusätzliche direkte Kommunikationsverbindung ist demgegenüber deutlich schneller und somit zu bevorzugen.

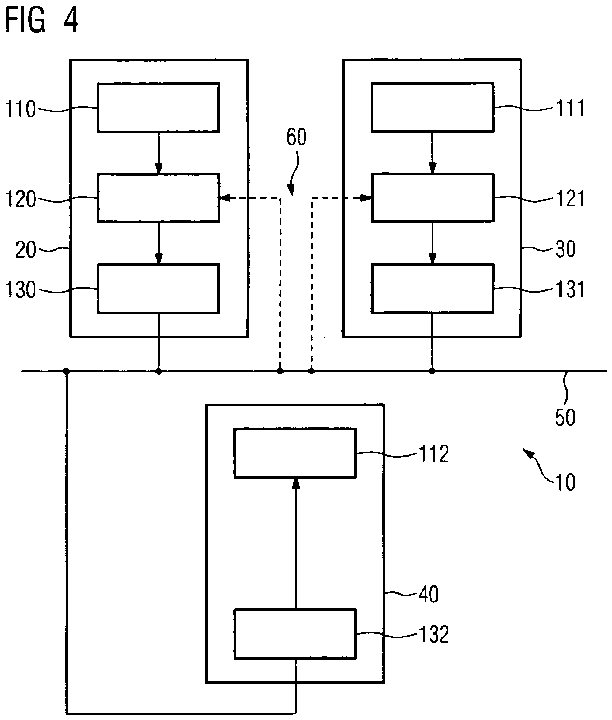

In der Figur 4 ist ein weiteres Ausführungsbeispiel für eine Anordnung 10 zum Schützen, Steuern oder Überwachen einer elektrischen Schalt- oder Energieversorgungsanlage dargestellt. Die Anordnung 10 gemäß Figur 4 entspricht im Wesentlichen der Anordnung 10 gemäß Figur 1; im Unterschied zu der Anordnung gemäß der Figur 1 ist die direkte Kommunikationsverbindung 60 zwischen den beiden Überwachungsmodulen 120 und 121 der beiden Feldgeräte 20 und 30 bei dem Ausführungsbeispiel gemäß Figur 4 anders ausgestaltet. Konkret wird die direkte Kommunikationsverbindung 60 über eine Peer-to-Peer-Verbindung realisiert, die über das Kommunikationsnetz 50 geleitet wird. Im Unterschied zu dem Ausführungsbeispiel gemäß der Figur 1 ist also keine separate Datenleitung zwischen den beiden Feldgeräten 20 und 30 vorhanden, die "direkte" Kommunikationsverbindung zwischen den Feldgeräten wird allein über das Kommunikationsnetz 50 abgewickelt.

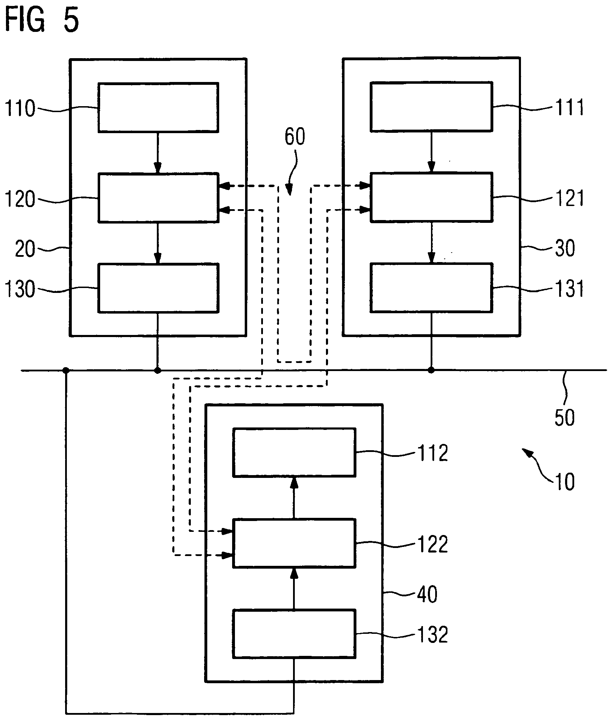

In der Figur 5 ist ein drittes Ausführungsbeispiel für eine Anordnung 10 zum Schützen, Steuern oder Überwachen einer elektrischen Schalt- oder Energieversorgungsanlage dargestellt. Bei diesem Ausführungsbeispiel ist auch das Leitebenengerät 40 mit einem Überwachungsmodul ausgestattet; dieses Überwachungsmodul trägt in der Figur 5 das Bezugszeichen 122.

Wie sich in der Figur 5 erkennen lässt, steht das Überwachungsmodul 122 mit den beiden Überwachungsmodulen 120 und 121 jeweils in einer direkten Kommunikationsverbindung. Diese direkte Kommunikationsverbindung kann beispielsweise durch Peer-to-Peer-Verbindungen gewährleistet werden, die über das Kommunikationsnetz 50 abgewickelt werden. Durch die direkte Anbindung des Leitebenengeräts 40 an die beiden Überwachungsmodule 120 und 121 wird bei dem Ausführungsbeispiel gemäß Figur 5 gewährleistet, dass auch das Leitebenengerät 40 über den Zustand der Feldgeräte informiert wird. Somit liegt in dem Leitebenengerät 40 zusätzlich die Information vor, ob die Datentelegramme D von dem ersten Feldgeräts 20 oder von dem zweiten Feldgerät 30 übermittelt werden.

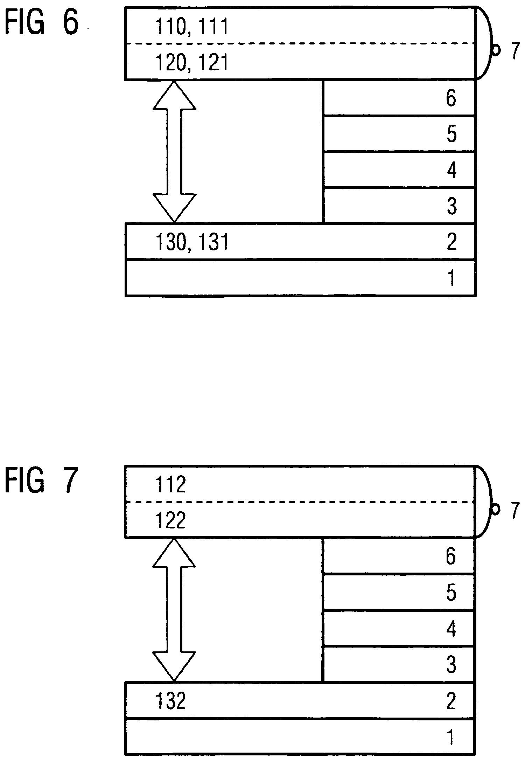

In der Figur 6 ist ein Ausführungsbeispiel für die softwaremäßige Realisierung der Module der beiden Feldgeräte 20 und 30 anhand des OSI (Open Systems Interconnection Reference Model)-Schichtenmodells dargestellt. Man erkennt die Bit-Übertragungsschicht 1, die Sicherungsschicht 2, die Vermittlungsschicht 3, die Transportschicht 4, die Sitzungsschicht 5, die Darstellungsschicht 6 sowie die Anwendungsschicht 7 des OSI-Modells. Darüber hinaus lässt sich erkennen, dass die beiden Kommunikationsmodule 130 bzw. 131 der beiden Feldgeräte 20 und 30 in der Sicherungsschicht 2 angeordnet sind. Die Betriebsmodule 110, 111 sowie die Überwachungsmodule 120, 121 der beiden Feldgeräte 20 und 30 sind jeweils in der Anwendungsschicht 7 angeordnet.

Bezüglich der Betriebsmodule und der Überwachungsmodule ist außerdem ersichtlich, dass die beiden Überwachungsmodule 120 und 121 funktional zwischen den Betriebsmodulen 110 und 111 angeordnet sind, so dass der Zugriff der Betriebsmodule 110 bzw. 111 auf das jeweilige Kommunikationsmodul 130 bzw. 131 durch die Überwachungsmodule 120 und 121 kontrolliert werden kann.

In der Figur 7 ist ein Ausführungsbeispiel für den Modulaufbau des Leitebenengeräts 40 gemäß Figur 5 dargestellt. Man erkennt, dass das Leitebenenmodul 112 sowie auch das Überwachungsmodul 122 in der OSI-Anwendungsschicht 7 und das Kommunikationsmodul 132 in der OSI-Sicherungsschicht 2 angeordnet sind. Auch hier kann das Kommunikationsmodul 122 beispielsweise derart angeordnet, dass es das Leitebenenmodul 112 von dem Kommunikationsmodul 132 trennt.

## Patentansprüche

1. Verfahren zum Schützen, Steuern oder Überwachen einer elektrischen Schalt- oder Energieversorgungsanlage (10), wobei bei dem Verfahren
- mit einem Feldgerät (20), insbesondere einem Schutzgerät, Datentelegramme (D) erzeugt werden, die sich auf den Zustand der Schalt- oder Energieversorgungsanlage beziehen, und
- die Datentelegramme an ein übergeordnetes Leitebenengerät (40) übertragen werden, wobei mit einem zu dem genannten ersten Feldgerät redundant arbeitenden zweiten Feldgerät (30) geprüft wird, ob das erste Feldgerät (20) funktionsfähig ist, indem
- eine Kommunikationsverbindung (60) zwischen den beiden Feldgeräten betrieben wird, über die das zweite Feldgerät von dem Funktionsstatus des ersten Feldgerätes Kenntnis erlangt, **dadurch gekennzeichnet, dass**
- das zweite Feldgerät das Weiterleiten eigener Datentelegramme (D) an das übergeordnete Leitebenengerät unterlässt, wenn das erste Feldgerät funktioniert, und andernfalls eigene Datentelegramme, die sich auf den Zustand der Schalt- oder Energieversorgungsanlage beziehen, an das übergeordnete Leitebenengerät übersendet.

2. Verfahren nach Anspruch 1,
**dadurch gekennzeichnet,**
- **dass** die Feldgeräte untereinander sowie mit dem Leitebenengerät über ein Kommunikationsnetz (50) verbunden werden und die Datentelegramme über das Kommunikationsnetz an das Leitebenengerät übermittelt werden und
- **dass** als Kommunikationsverbindung (60) zwischen den beiden Feldgeräten eine Peer-to-Peer-Verbindung über das Kommunikationsnetz betrieben wird.

3. Verfahren nach einem der voranstehenden Ansprüche,
**dadurch gekennzeichnet, dass** das zweite Feldgerät die Datentelegramme derart erzeugt, dass diese inhaltlich mit den Datentelegrammen des ersten Feldgeräts übereinstimmen, und das Leitebenengerät diese in identischer Weise auswertet wie die Datentelegramme des ersten Feldgeräts.

4. Verfahren nach einem der voranstehenden Ansprüche,
**dadurch gekennzeichnet, dass** in dem ersten und dem zweiten Feldgerät jeweils
- ein Betriebsmodul (110, 111), das die Funktion des Schützens, Steuerns oder Überwachens der elektrischen Schalt- oder Energieversorgungsanlage unterstützt und die Datentelegramme (D) für das übergeordnete Leitebenengerät erzeugt,
- ein Überwachungsmodul (120, 121), das die Kommunikationsverbindung (60) zwischen den Feldgeräten betreibt,
- sowie ein Kommunikationsmodul (130, 131), das das Senden der Datentelegramme durchführt,
betrieben werden, wobei das Betriebsmodul und das Kommunikationsmodul durch das Überwachungsmodul verbunden werden und das Weiterleiten der von dem Betriebsmodul erzeugten Datentelegramme an das Kommunikationsmodul von dem Überwachungsmodul veranlasst oder blockiert wird.

5. Verfahren nach Anspruch 4,
**dadurch gekennzeichnet, dass** das zweite Feldgerät das erste Feldgerät als nichtfunktionsfähig ansieht und die eigenen Datentelegramme an das übergeordnete Leitebenengerät sendet, wenn das Überwachungsmodul des zweiten Feldgerätes zu dem Überwachungsmodul des ersten Feldgerätes keine Kommunikationsverbindung aufbauen kann.

6. Verfahren nach Anspruch 4 oder 5,
**dadurch gekennzeichnet, dass** das zweite Feldgerät das erste Feldgerät als nichtfunktionsfähig ansieht und die eigenen Datentelegramme an das übergeordnete Leitebenengerät übersendet, wenn das Überwachungsmodul des ersten Feldgerätes dem Überwachungsmodul des zweiten Feldgerätes über die Kommunikationsverbindung mitteilt, dass das Betriebsmodul und/oder das Kommunikationsmodul des ersten Feldgerätes defekt ist.

7. Verfahren nach einem der voranstehenden Ansprüche,
**dadurch gekennzeichnet, dass** das Überwachungsmodul und das Betriebsmodul in der Anwendungsschicht 7 des OSI-Models und das Kommunikationsmodul in der Sicherungsschicht 2 des OSI-Models betrieben werden und der Zugriff des Betriebsmoduls aus der Schicht 7 auf das Kommunikationsmodul in der Schicht 2 von dem Überwachungsmodul überwacht wird.

8. Anordnung (10) zum Schützen, Steuern oder Überwachen einer elektrischen Schalt- oder Energieversorgungsanlage,
- mit einem Feldgerät (20), insbesondere einem Schutzgerät, zum Erzeugen von Datentelegrammen, die sich auf den Zustand der Schalt- oder Energieversorgungsanlage beziehen,
- mit einem zu dem ersten Feldgerät redundant arbeitenden zweiten Feldgerät (30), und
- mit einem den beiden Feldgeräten übergeordneten Leitebenengerät (40), wobei
- die beiden Feldgeräte über eine Kommunikationsverbindung (60) miteinander verbunden sind,
- das zweite Feldgerät derart ausgestaltet ist, dass es über die Kommunikationsverbindung von dem Funktionsstatus des ersten Feldgerätes Kenntnis erlangen kann, **dadurch gekennzeichnet, dass** das zweite Feldgerät das Weiterleiten eigener Datentelegramme an das übergeordnete Leitebenengerät unterlässt, wenn das erste Feldgerät funktioniert, und andernfalls eigene Datentelegramme, die sich auf den Zustand der Schalt- oder Energieversorgungsanlage beziehen, an das übergeordnete Leitebenengerät übersendet.

9. Anordnung nach Anspruch 8,
**dadurch gekennzeichnet,**
- **dass** die Feldgeräte untereinander sowie mit dem Leitebenengerät über ein Kommunikationsnetz (50) verbunden sind und die Datentelegramme über das Kommunikationsnetz an das Leitebenengerät übermittelt werden und
- **dass** als Kommunikationsverbindung zwischen den beiden Feldgeräten eine Peer-to-Peer-Verbindung über dieses Kommunikationsnetz betrieben wird.

10. Anordnung nach Anspruch 8 oder 9,
**dadurch gekennzeichnet, dass**
in dem Leitebenengerät für die beiden Feldgeräte eine gemeinsame Konfigurationsdatei gespeichert ist, die sowohl zum Auswerten der Datentelegramme des ersten Feldgerätes als auch zum Auswerten der Datentelegramme des zweiten Feldgerätes herangezogen wird.

11. Feldgerät (30) zum Schützen, Steuern oder Überwachen einer elektrischen Schalt- oder Energieversorgungsanlage, das geeignet ist, Datentelegramme, die sich auf den Zustand der Schalt- oder Energieversorgungsanlage beziehen, zu erzeugen und an ein übergeordnetes Leitebenengerät zu übersenden, wobei
- das Feldgerät eine Redundanzbetriebsart aufweist, in der es dazu bestimmt ist, eine Kommunikationsverbindung (60) zu einem anderen Feldgerät (20) zu betreiben, von dem Funktionsstatus dieses anderen Feldgerätes Kenntnis zu erlangen **dadurch gekennzeichnet, dass** es in dieser Betriebsart bestimmt ist, das Weiterleiten eigener Datentelegramme (D) an das übergeordnete Leitebenengerät (40) zu unterlassen, wenn das andere Feldgerät funktioniert, und andernfalls eigene Datentelegramme, die sich auf den Zustand der Schalt- oder Energieversorgungsanlage beziehen, an das übergeordnete Leitebenengerät zu übersenden.

12. Feldgerät nach Anspruch 11,
**dadurch gekennzeichnet, dass** das Feldgerät aufweist
- ein Betriebsmodul (111), das die Funktion des Schützens, Steuerns oder Überwachens der elektrischen Schalt- oder Energieversorgungsanlage unterstützt und die Datentelegramme für das übergeordnete Leitebenengerät erzeugt,
- ein Überwachungsmodul (121), das die Kommunikationsverbindung zwischen den Feldgeräten verwaltet, und
- ein Kommunikationsmodul (131), das das Senden und Empfangen von Datentelegrammen über das Kommunikationsnetz durchführt,
wobei das Betriebsmodul und das Kommunikationsmodul durch das Überwachungsmodul verbunden sind und das Weiterleiten der von dem Betriebsmodul erzeugten Datentelegramme an das Kommunikationsmodul von dem Überwachungsmodul durchgeführt und/oder blockiert wird.

13. Feldgerät nach Anspruch 11 oder 12,
**dadurch gekennzeichnet, dass** das Überwachungsmodul und das Betriebsmodul in der Anwendungsschicht 7 des OSI-Models und das Kommunikationsmodul in der Sicherungsschicht 2 des OSI-Models angeordnet sind und das Betriebsmodul aus der Schicht 7 von dem Kommunikationsmodul in der Schicht 2 durch das Überwachungsmodul getrennt ist.

## Claims

1. Method for protecting, controlling or monitoring an electrical switchgear or energy supply system (10), wherein the method involves
- a field device (20), particularly a protection device, being used to produce data messages (D) that relate to the state of the switchgear or energy supply system, and
- the data messages being transmitted to a superordinate control level device (40), wherein a second field device (30) operating redundantly with respect to said first field device is used to check whether the first field device (20) is functional by virtue of
- a communication link (60) between the two field devices being operated that the second device uses to gain knowledge of the functional status of the first field device, **characterized in that**
- the second field device omits to forward data messages (D) of its own to the superordinate control level device when the first field device functions, and otherwise sends data messages of its own that relate to the state of the switchgear or energy supply system to the superordinate control level device.

2. Method according to Claim 1,
**characterized**
- **in that** the field devices are connected to one another and to the control level device via a communication network (50) and the data messages are transmitted to the control level device via the communication network, and
- **in that** the communication link (60) operated between the two field devices is a peer-to-peer connection via the communication network.

3. Method according to either of the preceding claims,
**characterized in that**
the second field device produces the data messages such that the content thereof matches that of the data messages of the first field device, and the control level device evaluates said data messages in identical fashion to the data messages of the first field device.

4. Method according to one of the preceding claims,
**characterized in that**
the first and second field devices each have
- an operating module (110, 111), which supports the function of protection, control or monitoring of the electrical switchgear or energy supply system and produces the data messages (D) for the superordinate control level device,
- a monitoring module (120, 121), which operates the communication link (60) between the field devices,
- and a communication module (130, 131), which performs the sending of the data messages,
operated in them, wherein the operating module and the communication module are connected by the monitoring module and the forwarding of the data messages produced by the operating module to the communication module is prompted or blocked by the monitoring module.

5. Method according to Claim 4,
**characterized in that**
the second field device regards the first field device as nonfunctional and sends the data messages of its own to the superordinate control level device when the monitoring module of the second field device cannot set up a communication link to the monitoring module of the first field device.

6. Method according to Claim 4 or 5,
**characterized in that**
the second field device regards the first field device as nonfunctional and sends the data messages of its own to the superordinate control level device when the monitoring module of the first field device communicates to the monitoring module of the second field device, via the communication link, that the operating module and/or the communication module of the first field device is defective.

7. Method according to one of the preceding claims,
**characterized in that**
the monitoring module and the operating module are operated in the application layer 7 of the OSI model and the communication module is operated in the data link layer 2 of the OSI model and access by the operating module from layer 7 to the communication module in layer 2 is monitored by the monitoring module.

8. Arrangement (10) for protecting, controlling or monitoring an electrical switchgear or energy supply system,
- having a field device (20), particularly a protection device, for producing data messages that relate to the state of the switchgear or energy supply system,
- having a second field device (30) operating redundantly with respect to the first field device, and
- having a control level device (40) superordinate to the two field devices, wherein
- the two field devices are connected to one another via a communication link (60),
- the second field device is configured such that it can use the communication link to gain knowledge of the functional status of the first field device, **characterized in that** the second field device omits to forward data messages of its own to the superordinate control level device when the first field device functions, and otherwise sends data messages of its own that relate to the state of the switchgear or energy supply system to the superordinate control level device.

9. Arrangement according to Claim 8,
**characterized**
- **in that** the field devices are connected to one another and to the control level device via a communication network (50) and the data messages are transmitted to the control level device via the communication network, and
- **in that** the communication link operated between the two field devices is a peer-to-peer connection via this communication network.

10. Arrangement according to Claim 8 or 9,
**characterized in that**
the control level device for the two field devices has a common configuration file stored in it that is used both for evaluating the data messages of the first field device and for evaluating the data messages of the second field device.

11. Field device (30) for protecting, controlling or monitoring an electrical switchgear or energy supply system, which field device is suitable for producing data messages that relate to the state of the switchgear or energy supply system and for sending them to a superordinate control level device, wherein
- the field device has a redundancy mode in which it is intended to operate a communication link (60) to another field device (20) and to gain knowledge of the functional status of this other field device, **characterized in that** it is intended, in this mode, to omit to forward data messages (D) of its own to the superordinate control level device (40) when the other field device functions, and otherwise to send data messages of its own that relate to the state of the switchgear or energy supply system to the superordinate control level device.

12. Field device according to Claim 11,
**characterized in that**
the field device has
- an operating module (111), which supports the function of protection, control or monitoring of the electrical switchgear or energy supply system and produces the data messages for the superordinate control level device,
- a monitoring module (121), which manages the communication link between the field devices, and
- a communication module (131), which performs the sending and receiving of data messages via the communication network, wherein the operating module and the communication module are connected by the monitoring module and the forwarding of the data messages produced by the operating module to the communication module is performed and/or blocked by the monitoring module.

13. Field device according to Claim 11 or 12,
**characterized in that**
the monitoring module and the operating module are arranged in the application layer 7 of the OSI model and the communication module is arranged in the data link layer 2 of the OSI model and the operating module from layer 7 is isolated from the communication module in layer 2 by the monitoring module.

## Revendications

1. Procédé de protection, de commande ou de contrôle d'une installation (10) de distribution électrique ou d'alimentation en énergie électrique, dans lequel dans le Procédé :
- on produit, par un appareil (20) sur site, notamment par un appareil de protection, des télégrammes (D) de données, qui se rapportent à l'état de l'installation de distribution ou d'alimentation en énergie et
- on transmet les télégrammes de données à un appareil (40) de plan de conduite supérieur hiérarchiquement,
dans lequel
par un deuxième appareil (30) sur site travaillant de manière redondante par rapport au premier appareil mentionné sur site, on contrôle si le premier appareil (20) sur site est apte à fonctionner, en
- faisant fonctionner une liaison (30) de communication entre les deux appareils sur site, par laquelle le deuxième appareil sur site prend connaissance de l'état de fonctionnement du premier appareil sur site,
**caractérisé en ce que**
- le deuxième appareil sur site supprime l'acheminement de télégrammes (D) de données qui lui sont propres à l'appareil de plan de conduite supérieur hiérarchiquement, si le premier appareil sur site fonctionne, et sinon transmet, à l'appareil de plan de conduite supérieur hiérarchiquement, des télégrammes de données qui lui sont propres, qui se rapportent à l'état de l'installation de distribution ou d'alimentation en énergie.

2. Procédé suivant la revendication 1,
**caractérisé**
- **en ce que** l'on relie les appareils sur site entre eux, ainsi qu'à l'appareil de plan de conduite, par un réseau (50) de communication et l'on transmet les télégrammes de données à l'appareil de plan de conduite par le réseau de communication et
- **en ce que** l'on fait fonctionner, comme liaison (60) de communication entre les deux appareils sur site, une liaison peer-to-peer par le réseau de communication.

3. Procédé suivant l'une des revendications précédentes,
**caractérisé en ce que**
le deuxième appareil sur site produit les télégrammes de données, de manière à ce que ceux-ci coïncident en contenu avec les télégrammes de données du premier appareil sur site, et l'appareil de plan de conduite les exploite d'une manière identique aux télégrammes de données du premier appareil sur site.

4. Procédé suivant l'une des revendications précédentes,
**caractérisé en ce que**
dans le premier et dans le deuxième appareils sur site, on fait fonctionner respectivement
- un module (110, 111) de fonctionnement, qui assiste la fonction de protection de commande ou de contrôle de l'installation de distribution électrique ou d'alimentation en énergie électrique et qui produit les télégrammes (D) de données pour l'appareil de plan de conduite supérieur hiérarchiquement,
- un module (120, 121) de contrôle, qui fait fonctionner la liaison (60) de communication entre les appareils sur site,
- ainsi qu'un module (130, 131) de communication, qui effectue l'envoi des télégrammes de données,
dans lequel on relie le module de fonctionnement et le module de communication par le module de contrôle et on provoque ou on bloque l'acheminement des télégrammes de données produits par le module de fonctionnement au module de communication par le module de contrôle.

5. Procédé suivant la revendication 4,
**caractérisé en ce que**
le deuxième appareil sur site considère le premier appareil sur site comme inapte à fonctionner et envoie les télégrammes de données qui lui sont propres à l'appareil de plan de conduite supérieur hiérarchiquement, si le module de contrôle du deuxième appareil sur site ne peut pas établir de liaison de communication avec le module de contrôle du premier appareil sur site.

6. Procédé suivant la revendication 4 ou 5,
**caractérisé en ce que**
le deuxième appareil sur site considère le premier appareil sur site comme inapte à fonctionner et transmet les télégrammes de données qui lui sont propres à l'appareil de plan de conduite supérieur hiérarchiquement, si le module de contrôle du premier appareil sur site fait part au module de contrôle du deuxième appareil sur site par la liaison de communication que le module de fonctionnement et/ou le module de communication du premier appareil sur site est défectueux.

7. Procédé suivant l'une des revendications précédentes,
**caractérisé en ce que**
l'on fait fonctionner le module de contrôle et le module de fonctionnement dans la couche 7 d'application du modèle OSI et le module de communication dans la couche 2 de sécurité du modèle OSI et on contrôle l'accès du module de fonctionnement de la couche 7 au module de communication dans la couche 2 par le module de contrôle.

8. Dispositif (10) de protection, de commande ou de contrôle d'une installation de distribution électrique ou d'alimentation en énergie électrique,
- comprenant un appareil (20) sur site, notamment un appareil de protection, pour produire des télégrammes (D) de données, qui se rapportent à l'état de l'installation de distribution ou d'alimentation en énergie,
- comprenant un deuxième appareil (30) sur site travaillant de manière redondante par rapport au premier appareil sur site et
- comprenant un appareil (40) de plan de conduite supérieur hiérarchiquement aux deux appareils sur site,
dans lequel
- les deux appareils sur site sont reliés entre eux par une liaison (60) de communication,
- le deuxième appareil sur site est conformé de manière à pouvoir être mis en connaissance par la liaison de communication de l'état de fonctionnement du premier appareil sur site,
**caractérisé en ce que**
- le deuxième appareil sur site supprime l'acheminement de télégrammes (D) de données qui lui sont propres à l'appareil de plan de conduite supérieur hiérarchiquement, si le premier appareil sur site fonctionne, et sinon transmet, à l'appareil de plan de conduite supérieur hiérarchiquement, des télégrammes de données qui lui sont propres, qui se rapportent à l'état de l'installation de distribution ou d'alimentation en énergie.

9. Dispositif suivant la revendication 8,
**caractérisé**
- **en ce que** les appareils sur site sont reliés entre eux, ainsi qu'à l'appareil de plan de conduite, par un réseau (50) de communication et les télégrammes de données sont transmis à l'appareil de plan de conduite par le réseau de communication et
- **en ce que** l'on fait fonctionner, comme liaison (60) de communication entre les deux appareils sur site, une liaison peer-to-peer par le réseau de communication.

10. Dispositif suivant la revendication 8 ou 9,
**caractérisé en ce que**
il est mémorisé, dans l'appareil de plan de conduite pour les deux appareils sur site, un fichier de configuration commun, qui est mis à profit à la fois pour exploiter les télégrammes de données du premier appareil sur site et pour exploiter les télégrammes de données du deuxième appareil sur site.

11. Appareil (30) sur site de protection, de commande ou de contrôle d'une installation de distribution électrique ou d'alimentation en énergie électrique, qui est propre à produire des télégrammes de données, qui se rapportent à l'état de l'installation de distribution ou d'alimentation en énergie, et à les envoyer à un appareil de plan de conduite supérieur hiérarchiquement,
dans lequel
- l'appareil sur site a un type de fonctionnement à redondance, dans lequel il est destiné à faire fonctionner une liaison (60) de communication vers un autre appareil (20) sur site, à prendre connaissance de l'état de fonctionnement de cet autre appareil sur site,
**caractérisé en ce que**
- dans ce type de fonctionnement, il est destiné à supprimer l'acheminement de télégrammes (D) de données qui lui sont propres à l'appareil (40) de plan de conduite supérieur hiérarchiquement, si l'autre appareil sur site fonctionne, et sinon à envoyer des télégrammes de données qui lui sont propres, qui se rapportent à l'état de l'installation de distribution ou d'alimentation en énergie, à l'appareil de plan de conduite supérieur hiérarchiquement.

12. Appareil sur site suivant la revendication 11,
**caractérisé en ce que**
l'appareil sur site a
- un module (111) de fonctionnement, qui assiste la fonction de protection de commande ou de contrôle de l'installation de distribution électrique ou d'alimentation en énergie électrique et qui produit les télégrammes (D) de données pour l'appareil de plan de conduite supérieur hiérarchiquement,
- un module (121) de contrôle, qui gère la liaison de communication entre les appareils sur site et
- un module (131) de communication, qui effectue l'émission et la réception de télégrammes de données par le réseau de communication,
dans lequel le module de fonctionnement et le module de communication sont reliés par le module de contrôle et l'acheminement des télégrammes de données produits par le module de fonctionnement vers le module de communication s'effectue et/ou est bloqué par le module de contrôle.

13. Appareil sur site suivant la revendication 11 ou 12,
**caractérisé en ce que**
le module de contrôle et le module de fonctionnement sont disposés dans la couche 7 d'application du modèle OSI et le module de communication dans la couche 2 de sécurité du modèle OSI et le module de fonctionnement de la couche 7 est séparé du module de communication de la couche 2 par le module de contrôle.
